# NEUE EUROPÄISCHE PATENTSCHRIFT

(11) **EP 0 482 507 B2**
(45) Veröffentlichungstag und Bekanntmachung des Hinweises auf die Entscheidung über den Einspruch: **28.03.2001**
(45) Hinweis auf die Patenterteilung: 14.08.1996
(21) Anmeldenummer: 91117703.8
(22) Anmeldetag: 17.10.1991
(51) Int. Cl.: C08L 75/04

(54) **Verfahren zur Herstellung von flammwidrigen Polyurethan-Weichschaumstoffen mit verminderter Rauchgasdichte und Melamin-Blähgraphit-Polyether-polyol-dispersionen hierfür**
Process for production of non-flammable polyurethane-soft-foam material with reduced smoke gas density and melamin-expanded graphite-polyether-dispersions therefore
Procédé pour la production des produits mousses non inflammables de polyuréthane avec densité réduit de gaz de fumée et dispersions de mélamine, graphite expansée, polyethers et polyoles

(30) Priorität: 26.10.1990 DE 4034046
(43) Veröffentlichungstag der Anmeldung: 29.04.1992
(73) Patentinhaber: BASF Aktiengesellschaft, 67063 Ludwigshafen (DE)
(72) Erfinder: Lutter, Heinz-Dieter, Dr., W-6903 Neckargemuend (DE); Zschiesche, Ruth, Dr., W-6800 Mannheim 1 (DE); Gabbert, Hans-Jürgen, Dr., W-2878 Wildeshausen (DE); Haase, Volker, W-8081 Schoengeising (DE); Fimmel, Karl, W-3492 Brakel (DE)

(56) Entgegenhaltungen:
- EP-A- 0 192 888
- EP-A- 0 358 950
- EP-A- 0 450 403
- DE-A- 2 348 838
- DE-C- 3 542 326
- PATENT ABSTRACTS OF JAPAN, unexamined applications, C Sektion, Band 14, Nr. 522, 15. November 1990 THE PATENT OFFICE JAPANESE GOVERNMENT Seite 778
- PATENT ABSTRACTS OF JAPAN, unexamined applications, M Sektion, Band 14, Nr. 243, 23. Mai 1990 THE PATENT OFFICE JAPANESE GOVERNMENT Seite 978
- CHEMICAL ABSTRACTS, Band 112, Nr. 22, 28. Mai 1990 Columbus, Ohio, USA R. HURD "Fire-retardant foams.", Seite 67, Spalte 1, Zusammenfassung-Nr. 200 066u
- Chemicals Abstracts, Band 114, Nr. 6, Zusammenfassung-Nr. 44602z

## Beschreibung

Die Erfindung betrifft ein Verfahren zur Herstellung von flammwidrigen Polyurethan-Weichschaumstoffen - im folgenden auch abgekürzt PU-Weichschaumstoffe genannt -, die im Brandfalle weniger Rauchgase entwickeln. Als Flammschutzmittel zur Herstellung der PU-Weichschaumstoffe finden erfindungsgemäß Melamin, Blähgraphit und gegebenenfalls mindestens ein zusätzliches anderes Flammschutzmittel Verwendung.

Die Herstellung von PU-Weichschaumstoffen ist bekannt und wird in zahlreichen Patent- und Literaturpublikationen beschrieben. Beispielhaft genannt seien das Kunststoff-Handbuch, Band VII, Polyurethane, Carl Hanser Verlag, München, 1. Auflage, 1966, herausgegeben von Dr. R. Vieweg und Dr. A. Höchtlen, und 2. Auflage, 1983, herausgegeben von Dr. G. Oertel.

Zur Herstellung von PU-Weichschaumstoffen werden üblicherweise als Polyisocyanate handelsübliche Toluylendiisocyanate, als polyfunktionelle höhermolekulare Verbindungen Polyoxyalkylen-polyole auf der Grundlage von 1,2-Propylenoxid und/oder Ethylenoxid sowie Mischungen aus derartigen Polyoxyalkylen-polyolen und Pfropf-polyoxyalkylen-polyolen und als Kettenverlängerungsmittel Alkandiol oder hydroxyl- und/oder aminogruppenhaltige Verbindungen mit einer Funktionalität größer als 2, wie z.B. Glycerin oder Alkanolamine, verwendet.

Derartige PU-Weichschaumstoffe sind nicht flammwidrig; nachteilig ist insbesondere ihre leichte Entflammbarkeit. Zur Verminderung dieses Nachteils werden den schaumfähigen PU-Mischungen Flammschutzmittel, vorzugsweise halogen- und/oder phosphorhaltige Verbindungen, einverleibt. Der Zusatz dieser Produkte wirkt sich jedoch vielfach negativ auf die mechanischen Eigenschaften der erhaltenen PU-Weichschaumstoffe aus. Es hat daher nicht an Versuchen gefehlt, neue Flammschutzmittel zu entwickeln und die halogen- und/oder phosphorhaltigen Verbindungen ganz oder zumindest teilweise in PU-Weichschaumstoffen durch diese zu ersetzen.

Als hierfür geeignete Verbindung wird beispielsweise das bei 354°C schmelzende, polyfunktionelle Melamin genannt. Nach Angaben der DE-A-23 48 838 wird das Melamin in der Polyol- und/oder der Polyisocyanatkomponente suspendiert und die erhaltene Suspension sofort zu isocyanuratgruppenhaltigen, flammfesten PU-Kunststoffen verarbeitet. Nichtentflammbare PU-Hartschaumstoffe werden gemäß US-A-4 221 875 (DE-A-28 09 084) durch Umsetzung von organischen Polyisocyanaten und Polyoxyalkylen-polyolen in Gegenwart von Treibmitteln und Silikonen als oberflächenaktiver Zusatzstoff sowie 20 bis 100 Gew.-Teilen Melamin als Flammschutzmittel pro 100 Gew.-Teilen Polyoxyalkylen-polyol erhalten.

Die EP-A-0 004 618 (US-A-4 258 141) beschreibt ein Verfahren zur Herstellung von schwerentflammbaren PU-Weichschaumstoffen unter Verwendung einer Mischung aus Diphenylmethan-diisocyanaten und Polyphenyl-polymethylen-polyisocyanaten (Roh-MDI) mit einem Gehalt an Diphenylmethandiisocyanat-lsomeren von 40 bis 90 Gew.-%, bezogen auf das Gesamtgewicht, als Polyisocyanate und Cyansäurederivate, insbesondere Melamin, als Flammschutzmittel.

Obwohl nach diesen Verfahren die Flammwidrigkeit der PU-Weichschaumstoffe bedeutend verbessert werden konnte, muß auch hier die starke Sedimentation des Melamins im Polyol, die bereits nach kurzer Lagerzet auftritt, als nachteilig angesehen werden. Zur überwindung dieses Nachteils werden in der EP-B-023 987 (US-A-4 293 657) stabile Melamin-Polyol-Dispersionen beschrieben, bei denen das Melamin in situ in dem Polyol in Gegenwart mindestens eines Stabilisators mit einer örtlichen Energiedichte von 10 bis 3000 kW/m³ auf eine Teilchengröße von kleiner als 10 µm zerkleinert wird. Diese zusätzliche Verfahrensmaßnahme ist apparativ aufwendig und kostenintensiv.

Bekannt ist ferner die Verwendung von Blähgraphit, gegebenenfalls in Kombination mit anderen Flammschutzmitteln, zur Herstellung von flammwidrigen PU-Hart- und Weichschaumstoffen.

Nach Angaben der EP-A-0 192 888 (US-A-4,698,369) wird als Flammschutzmittel zur Herstellung von flexiblen PU-Polyetherschaumstoffen expandierbarer Graphit verwendet. Nachteilig an diesen Schaumstoffen ist die starke Dochtwirkung durch die Graphitkomponente, die zum Weiterbrennen führt, eine starke Flugaschenbildung und die Bildung eines feinpulverigen, leicht verstäubbaren Abbrands.

Zur Vermeidung dieses Nachteils wird in der EP-A-358 950 (US-A-4 977 194) die Verwendung von Polymerdispersionen, hergestellt durch Umsetzung von Mono- und/oder Polyisocyanaten mit primären und/oder sekundären Aminogruppen aufweisenden Polyaminen und/oder Hydrazinen und/oder Hydraziden und/oder Alkanolaminen in einer 1 bis 8 primäre und/oder sekundäre Hydroxylgruppen aufweisenden Verbindung mit einem Molekulargewicht von 400 bis 16 000 als höhermolekulare Polyhydroxylverbindung und einer Kombination aus einem durch anorganische blähfähige Materialien modifizierten Graphit und einem anorganischen Co-Flammschutzmittel, vorzugsweise Ammoniumpolyphosphat, Kalkstickstoff, Aluminiumoxidhydrat oder Calciumcarbonat beschrieben. Bevorzugt eingesetzt werden Graphittypen, die durch Schwefelsäure, Nitrat oder Fluorid modifiziert worden sind. Da die geeigneten Polymerdispersionen nach einem speziellen Verfahren hergestellt werden müssen, sind die Produkte relativ kostspielig.

Die prioritätsältere, nicht vorveröffentlichte EP-A-0 450 403 beschreibt ein Verfahren zur Herstellung eines flammwidrigen, elastischen PU-Weichschaumstoffes unter Verwendung einer Mischung aus Blähgraphit und Melamin im Verhältnis 1:3 bis 2:3 in einer Menge von 20 bis 40 Gew.-%, bezogen auf das Gewicht der Reaktionsmischung, als flammhemmendes Mittel. Durch den Zusatz von Melamin zum Blähgraphit kann ein Nachschwelen des PU-Weichschaumstoffs mit der Gefahr einer nachfolgenden Selbstentzündung vermieden werden.

Anstelle der vorgenannten Polymerdispersionen können nach Angaben der EP 337 228 als höhermolekulare Verbindungen mit mindestens zwei reaktiven Wasserstoffatomen auch Polyester, Polycarbonate, Polylactone und/oder Polyamide verwendet werden. Aufgrund der relativ hochviskosen, Estergruppen gebunden enthaltenden Verbindungen mit Molekulargewichten von 400 5 bis 10 000 sind die Formulierungen auf üblichen Vorrichtungen zur Herstellung von Formschaumstoffen nur schwer verarbeitbar.

Die Aufgabe der vorliegenden Erfindung bestand darin, die Flammwidrigkeit von PU-Weichschaumstoffen weiter zu verbessern unter gleichzeitiger Reduzierung der Rauchgase im Brandfalle. Die melaminhaltigen Formulierungen sollten zumindest über den Verarbeitungszeitraum lagerbeständig, relativ niedrigviskos, gut fließfähig, homogen und nach dem Zweikomponenten-Verfahren mit Hilfe der Hoch- oder Niederdruckschäumtechnik gut verarbeitbar sein.

Diese Aufgabe konnte überraschenderweise gelöst werden durch die Verwendung von Melamin und Ammoniumpolyphosphat und Blähgraphit als Flammschutzmittel.

Gegenstand der Erfindung ist somit ein Verfahren zur Herstellung von flammwidrigen PU-Weichschaumstoffen mit verminderter Rauchgasdichte im Brandfalle durch Umsetzung von
a) organischen Polyisocyanaten und/oder modifizierten organischen Polyisocyanaten mit
b) höhermolekularen Verbindungen mit mindestens zwei reaktiven Wasserstoffatomen, vorzugsweise Polyether-polyolen, und
c) gegebenenfalls niedermolekularen Kettenverlängerungsmitteln
in Gegenwart von
d) Flammschutzmitteln,
e) Treibmitteln,
f) Katalysatoren
sowie gegebenenfalls
g) Hilfsmitteln und/oder Zusatzstoffen, das dadurch gekennzeichnet ist, daß als Flammschutzmittel (d) pro 100 Gew.-Teile des höhermolekularen verbindungen mit mindestens zwei reaktiven Wasserstoffatomen b)
di) 5 bis 100 Gew.-Teile Melamin
dii) 6 bis 18 Gew.-Teile Blähgraphit und
diii) 0,5 bis 15 Gew.-Teile modifiziertes, d.h. mit gehärtetem Epoxidharz umhülltes, oder unmodifiziertes Ammoniumpolyphosphat verwendet werden.

Durch die Verwendunavon Melamin und Ammoniumpolyphosphat in Verbindung mit Blähgraphit als Flammschutzmittel sowie höhermolekularen Polyether-polyolen, werden Systemkomponenten erhalten, deren Viskosität im Vergleich zu konventionellen Systemen mit entsprechenden Feststoffgehalten deutlich reduziert wurde. Bereits untergeordnete Blähgraphitzusatzmengen bewirken eine beträchtliche Stabilisierung der Melamin-Polyether-polyoldispersion. Verbunden mit einer erhöhten Fließfähigkeit ließen sich die Systemkomponenten sowohl auf Hochdruck- wie auf Niederdruckverschäumungsanlagen gleichermaßen sehr gut zu PU-Weichschaumstoff-Formkörpern verarbeiten.

Die hergestellen PU-Weichschaumstoffe bzw. vorzugsweise PU-Weichschaumstoff-Formkörper besaßen eine gute Flammwidrigkeit und bildeten im Falle eines Brands weniger Rauchgase. Messungen der Flammwidrigkeit nach dem 5 Kerosinbrennertest gemäß FAR 25 853 C und der Rauchgasdichte nach ASTM E 662-79 Standard Test Method for specific optical density of smoke generated by solid materials, die der Airbustransportspecification (ATS 1000.001) entspricht, an den erfindungsgemäß hergestellten PU-Weichschaumstoffen zeigten bedeutend bessere Ergebnisse als PU-Weichschaumstoffe, die als einziges Flammschutzmittel Melamin in den entsprechenden Mengen enthielten. Trotz des relativ hohen Melamingehalts besitzen die PU-Weichschaumstoffe ein gutes mechanisches Eigenschaftsniveau. Erwähnenswert sind insbesondere die Zug- und Weiterreißfestigkeit, Dehnung sowie die Ergebnisse des Dauerschwingversuchs nach DIN 53574.

Zu den für das erfindungsgemäße Verfahren verwendbaren Ausgangskomponenten ist im einzelnen folgendes auszuführen:
a) Zur Herstellung der flammwidrigen PU-Weichschaumstoffe, vorzugsweise der PU-Weichschaumstoff-Formkörper, eignen sich die bekannten organischen, z.B. aliphatischen, cycloaliphatischen, araliphatischen, cycloaliphatisch-aromatischen und vorzugsweise aromatischen Di- und/oder Polyisocyanate. Im einzelnen seien als aromatische Polyisocyanate beispielhaft genannt: Mischungen aus 4,4'- und 2,4'-Diphenylmethandiisocyanaten (MDI), Mischungen aus MDI-lsomeren und Polyphenyl-polymethylen-polyisocyanaten, sogenanntes Roh-MDI, zweckmäßigerweise mit einem Gehalt an MDI-lsomeren von mindestens 50 Gew.-%, vorzugsweise von 60 bis 90 Gew.-% und mehr, bezogen auf das Gesamtgewicht der Mischung, 2,4- und 2,6-Toluylen-diisocyanat sowie die entsprechenden handelsüblichen Isomerenmischungen, Mischungen aus 2,4- und 2,6-Toluylen-diisocyanat und MDI, vorzugsweise 4,4'- und 2,4'-MDI, und/oder Roh-MDI, beispielsweise solchen mit einem MDI-Gehalt von 30 bis 90 Gew.-%, vorzugsweise 40 bis 80 Gew.-%, bezogen auf das Gesamtgewicht des Roh-MDI's.
   Geeignet sind auch sogenannte modifizierte mehrwertige Isocyanate, d.h. Produkte, die durch chemische Umsetzung organischer Di- und/oder Polyisocyanate erhalten werden. Beispielhaft genannt seien Ester-, Harnstoff-, Biuret-, Allophanat-, Isocyanurat- und vorzugsweise Carbodiimid-, Uretonimin- und/oder Urethangruppen enthaltende Di- und/oder Polyisocyanate. Im einzelnen kommen beispielsweise in Betracht: Urethangruppen enthaltende Prepolymere mit einem NCO-Gehalt von 14 bis 2,8 Gew.-%, vorzugsweise von 12 bis 3,5 Gew.-% oder Quasiprepolymere mit einem NCO-Gehalt von 35 bis 14 Gew.-%, vorzugsweise von 34 bis 22 Gew.-%, wobei mit Urethangruppen modifizierte Polyisocyanate aus Toluylen-diisocyanaten, insbesondere einem NCO-Gehalt von 34 bis 28 Gew.-% und solche aus 4,4'-MDI, 4,4'- und 2,4'-MDI-lsomerenmischungen oder Roh-MDI, insbesondere einen NCO-Gehalt von 28 bis 14 Gew.-%, insbesondere bevorzugt von 28 bis 22 Gew.-%, bezogen auf das Gesamtgewicht, aufweisen und hergestellt werden durch Umsetzung von Diolen, Oxalkylen-glykolen und/oder Polyoxyalkylen-glykolen mit Molekulargewichten von 62 bis 6000, vorzugsweise von 134 bis 4200 mit Toluylen-diisocyanaten, 4,4'-MDI, MDI-lsomerengemischen und/oder Roh-MDI z.B. bei Temperaturen von 20 bis 110°C, vorzugsweise von 50 bis 90°C, wobei als Oxalkylen- und Polyoxyalkylen-glykole, die einzeln oder als Gemische eingesetzt werden können, beispielhaft genannt seien: Diethylen-, Dipropylen-, Polyoxyethylen-, Polyoxypropylen- und Polyoxypropylen-polyoxyethylen-glykole, Carbodiimidgruppen und/oder Uretonimingruppen enthaltende Polyisocyanate, z.B. auf MDI-Isomeren- und/oder Toluylen-diisocyanat-Basis.
   Besonders bewährt haben sich jedoch und daher vorzugsweise Anwendung finden Toluylen-diisocyanat-2,4, Toluylen-diisocyanat-2,6, Mischungen aus Toluylen-diisocyanat-2,4 und -2,6 und insbesondere Mischungen aus 4,4'- und 2,4'-MDI, Roh-MDI mit einem MDI-Gehalt von mindestens 50 Gew.-%, bezogen auf das Gesamtgewicht, Mischungen aus 4,4'- und 2,4'-MDI und 2,4- und 2,6-TDI-Gemischen, Mischungen aus Roh-MDI und 2,4- und 2,6-TDI-Gemischen und Urethangruppen enthaltenden Polyisocyanatmischungen mit einem NCO-Gehalt von 28 bis 14 Gew.-%, bezogen auf das Gesamtgewicht, hergestellt aus MDI und/oder Roh-MDI und Polyoxypropylenglykolen mit einem Molekulargewicht von 134 bis 4200 oder Polyoxypropylen-polyoxyethylen-polyolen mit einem Ethylenoxidgehalt von maximal 35 Gew.-% und einem Molekulargewicht von 134 bis 4200, vorzugsweise von 1800 bis 4200.
b) Als höhermolekulare Verbindungen mit mindestens zwei reaktiven Wasserstoffatomen (b) finden, insbesondere Polyether-polyole, zweckmäßigerweise solche mit einer Funktionalität von durchschnittlich 2,0 bis 4,0, vorzugsweise 2,0 bis 3,0 und insbesondere 2,0 bis 2,4 und einem Molekulargewicht von durchschnittlich 2200 bis 8000, vorzugsweise 3600 bis 6500 Verwendung. Geeignet sind auch Mischungen aus Polyether-polyolen, und Polyetherpolyaminen mit einem Polyether-polyamingehalt von maximal 35 Gew.-%, vorzugsweise 0,5 bis 12 Gew.-%, bezogen auf das Gesamtgewicht. Geeignet sind ferner Polyether-polyole mit Molekulargewichten unter 2200, beispielsweise von 250 bis 2200. Diese werden jedoch zweckmäßigerweise nur in solchen Mengen und im Gemisch mit höhermolekularen Polyether-polyolen eingesetzt, so daß Mischungen mit Molekulargewichten von durchschnittlich mindestens 2200 resultieren.

Geeignete Polyether-polyole können nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 4, vorzugsweise 2 bis 3 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3-bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, Dialkanolamine und/oder Trialkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, insbesondere zwei- und/oder dreiwertige Alkohole und/oder Alkylenglykole, wie z.B. Ethandiol, Propandiol-1,2 und -1,3, Diethylenglykol, Dipropylenglykol, Butandiol-1,4, Hexandiol-1,6, Glycerin und Trimethylol-propan sowie Pentaerythrit.

Die Polyether-polyole, vorzugsweise Polyoxypropylen- und Polyoxypropylen-polyoxyethylen-polyole, besitzen, wie bereits dargelegt wurde, eine Funktionalität von 2 bis 4, vorzugsweise 2 bis 3,0 und insbesondere 2 bis 2,4 und Molekulargewichte von 2200 bis 8000, vorzugsweise 3600 bis 6500 und insbesondere 3900 bis 6000 und geeignete Polyoxytetramethylen-glykole ein Molekulargewicht bis ungefähr 3500, vorzugsweise von 250 bis 2200. Insbesondere eingesetzt werden Polyoxypropylen-polyoxyethylen-polyole mit mehr als 50 %, vorzugsweise mehr als 70 % endständigen primären Hydroxylgruppen.

Als Polyether-polyole eignen sich ferner polymermodifizierte Polyether-polyole, vorzugsweise Pfropf-polyetherpolyole. Diese können hergestellt werden durch in situ Polymerisation von olefinisch ungesättigten Monomeren oder -gemischen, wie z.B. Styrol, Acrylnitril oder vorzugsweise Styrol-Acrylnitrilmischungen, in Polyether-polyolen, z.B. den oben beschriebenen Polyether-polyolen, analog den Angaben der deutschen Patentschriften Nrs. 11 11 394, 12 22 669 (US 3 304 273, 3 383 351, 3 523 093), 11 52 536 (GB 1 040 452) und 11 52 537 (GB 987 618) oder durch Dispergieren von Pfropf-polymeren, die zuvor durch radikalische Polymerisation in Lösungsmitteln hergestellt wurden, in Polyether-polyolen analog den Angaben der US-Patentschriften 3 391 092, 4 014 846, 4 093 573. Zur Herstellung der Pfropf-polyetherpolyole eignen sich sowohl die obengenannten gesättigten Polyether-polyole, die gemäß US Reissue Patent Nr. 28 715 im wesentlichen frei sind von ethylenisch ungesättigten Einheiten als auch olefinisch ungesättigte Polyether-polyole wie sie z.B. in der US Patentschrift 3 652 659 und im US Reissue Patent 29 014 beschrieben werden. Als polymermodifizierte Polyoxyalkylen-polyole eignen sich ferner tert. Aminogruppen gebunden enthaltende Polyurethan-Polyether-polyoldispersionen, wie sie beispielsweise beschrieben werden in der DE-A-32 31 497. Die polymermodifizierten Polyoxyether-polyole, die zweckmäßigerweise 2 bis 35 Gew.-%, vorzugsweise 3 bis 25 Gew.-%, bezogen auf das Gesamtgewicht, Polymerpartikel besitzen, können ebenso wie die Polyoxyalkylen-polyole einzeln oder in Form von Mischungen verwendet werden.

Bewährt haben sich beispielsweise Polyether-polyolmischungen (b), bestehend aus
b1) höhermolekularen Polyether-polyolen mit einer Funktionalität von durchschnittlich 2 bis 3 und
b2) höhermolekularen polymermodifizierten Polyether-polyolen mit einer Funktionalität von durchschnittlich 2 bis 3, ausgewählt aus der Gruppe der tert. Aminogruppen gebunden enthaltenden Polyurethan-Polyether-polyoldispersionen und/oder insbesondere der Pfropfpolyether-polyole. Nach einer bevorzugten Ausführungsform besteht die Polyolmischung (b) zweckmäßigerweise aus
b1) mindestens 60 Gew.-%, vorzugsweise 75 bis 99,9 Gew.-%, bezogen auf das Gewicht der Mischung (b), mindestens eines Polyether-polyols mit einer durchschnittlichen Funktionalität von 2 bis 3, insbesondere 2 bis 2,4 und einem durchschnittlichen Molekulargewicht von 3600 bis 6500, insbesondere 3900 bis 6000 und
b2) weniger als 40 Gew.-%, vorzugsweise 25 bis 0,1 Gew.-%, bezogen auf das Gewicht der Mischung (b), mindestens eines polymermodifizierten Polyether-polyols mit einer Funktionalität von durchschnittlich 2 bis 3, insbesondere 2 bis 2,4 und einem durchschnittlichen Molekulargewicht von 3600 bis 6500, insbesondere 3900 bis 6000, ausgewählt aus der Gruppe der tert. Aminogruppen gebunden enthaltenden Polyurethan-Polyether-polyoldispersionen, vorzugsweise der Pfropfpolyether-polyole oder von Mischungen davon.
c) Zur Herstellung der flammwidrigen PU-Weichschaumstoffe oder PU-Weichformschaumstoffe werden zweckmäßigerweise zusätzlich Kettenverlängerungs- und/oder Vernetzungsmittel (c) mitverwendet. Als derartige Mittel (c) kommen polyfunktionelle, insbesondere di- und trifunktionelle Verbindungen mit Molekulargewichten von 18 bis ungefähr 400, vorzugsweise von 62 bis ungefähr 300 in Betracht. Verwendet werden beispielsweise Di- und/oder Trialkanolamine, wie z.B. Diethanolamin und Triethanolamin, aliphatische Diole und/oder Triole mit 2 bis 6 Kohlenstoffatomen im Alkylenrest, wie z.B. Ethan-, 1,4-Butan-, 1,5-Pentan-, 1,6-Hexandiol, Glycerin und/oder Trimethylolpropan, Wasser und niedermolekulare Ethoxylierungs- und/oder Propoxylierungsprodukte, hergestellt aus den vorgenannten Dialkanolaminen, Trialkanolaminen, Diolen und/oder Triolen sowie aliphatischen und/oder aromatischen Diaminen wie z.B. 1,2-Ethan-, 1,4-Butan-, 1,6-Hexandiamin, 2,4- und/oder 2,6-Toluylen-diamin, 4,4'-Diamino-diphenylmethan, 3,3'-di- und/oder 3,3',5,5'-tetraalkyl-substituierten 4,4'-Diamino-diphenylmethanen als Startermolekülen und Alkylenoxid oder -gemischen.
   Als Kettenverlängerungsmittel (c) vorzugsweise eingesetzt werden Dialkanolamine, Diole und/oder Triole und insbesondere Ethandiol, Butandiol-1,4, Hexandiol-1,6, Diethanolamin, Trimethylolpropan und Glycerin oder Mischungen aus mindestens zwei der vorgenannten Verbindungen. Die Kettenverlängerungs- und/oder Vernetzungsmittel kommen zweckmäßigerweise in solchen Gewichtsmengen zur Anwendung, daß pro 5 100 Gew.-Teile der höhermolekularen Verbindungen mit mindestens zwei reaktiven Wasserstoffatomen (b) 0 bis 25 Gew.-Teile, vorzugsweise 4 bis 10 Gew.-Teile der Komponente (c) in der Reaktionsmischung vorliegen.
d) Zur Erhöhung der Flammwidrigkeit unter gleichzeitiger Reduzierung der Rauchgasdichte im Brandfalle werden zur Herstellung der PU-Weichschaumstoffe als Flammschutzmittel (d) erfindungsgemäß Melamin Ammoniumpolyphosphat und Blähgraphit in wirksamen Mengen verwendet. Das Melamin Ammoniumpolyphosphat und der Blähgraphit können hierzu in handelsüblicher Form eingesetzt werden.

Zweckmäßigerweise verwendet wird ein Melamin mit einer durchschnittlichen Komgröße von 5 bis 50 µm, das folgende Komgroßenverteilung aufweist:
10 Gew.-% der Teilchen sind größer als 30 um
30 Gew.-% der Teilchen sind größer als 24 µm
50 Gew.-% der Teilchen sind größer als 20 µm
70 Gew.-% der Teilchen sind größer als 16 µm
90 Gew.-% der Teilchen sind größer als 11 µm

Besonders bewährt hat sich und daher vorzugsweise eingesetzt wird Melamin mit einer Korngröße von durchschnittlich 16 bis 50 µm, insbesondere von 20 bis 40 µm und einem Schüttgewicht von 300 bis 800 g/Liter, insbesondere von 500 bis 650 g/Liter. Das Melamin kommt zweckmäßigerweise in einer Menge von 5 bis 100 Gew.-Teilen, vorzugsweise 35 bis 80 Gew.-Teilen und insbesondere 45 bis 65 Gew.-Teilen pro 100 Gew.-Teilen der höhermolekularen Verbindungen mit mindestens zwei reaktiven Wasserstoffatomen (b) zur Anwendung.

Zur Stabilisierung des Melamins in den höhermolekularen Polyether-polyolen und zur Verbesserung der Verarbeitbarkeit der Formulierung findet zweckmäßigerweise ein Blähgraphit Verwendung, bei dem 95 Gew.-% der Teilchen eine durchschnittliche Teilchengröße von kleiner als 0,5 mm besitzen. Insbesondere geeignet und daher vorzugsweise eingesetzt werden flockenförmige Blähgraphite, die folgende Komgrößenverteilung besitzen:
ungefähr 10 Gew.-% der Teilchen kleiner als 0,15 mm,
ungefähr 35 Gew.-% der Teilchen von 0,15 bis 0,25 mm,
ungefähr 50 Gew.-% der Teilchen von 0,25 bis 0,50 mm und
ungefähr 5 Gew.-% der Teilchen größer als 0,50 mm.

Der Blähgraphit wird in einer Menge von 6 bis 18 Gew.-Teilen pro 100 Gew.-Teilen der höhermolekularen Verbindungen mit mindestens zwei reaktiven Wasserstoffatomen (b) eingesetzt, wobei aufgrund des überraschenden synergistischen Effekts durch den Zusatz von relativ geringen Blähgraphitmengen die durch das Melamin und das Ammoniumpolyphosphat bewirkte Flammwidrigkeit entscheidend verbessert werden kann.

Üblicherweise werden zur Herstellung der flammwidrigen PU-Weichschaumstoffe oder vorzugsweise PU-Weichschaumstoff-Formkörper nach dem erfindungsgemäßen Verfahren als Flammschutzmittel Melamin und Blähgraphit verwendet. Zur Erzielung spezieller Effekte, wie z.B. Homogenisierung und/oder Stabilisierung der Ausgangskomponentengemische, Erweiterung des Verarbeitungsbereichs z.B. hinsichtlich der Reaktionsparameter und der Verschäumungsanlagen, der Verarbeitungssicherheit, des Entformungverhaltens, gezielte Verbesserung spezieller mechanischer Eigenschaften u.a. kann es sich als vorteilhaft erweisen, das Gemisch aus Melamin Ammoniumpolyphosphat und Blähgraphit mit anderen organischen oder anorganischen Flammschutzmitteln zu kombinieren, so daß diese gegebenenfalls in reduzierten Mengen eingesetzt werden können.

Als zusätzliche Flammschutzmittel, die in Mengen von 0 bis 15 Gew.-Teilen, vorzugsweise 0,5 bis 8 Gew.-Teilen, bezogen auf 100 Gew.-Teile der höhermolekularen Verbindungen mit mindestens zwei reaktiven Wasserstoffatomen (b) verwendet werden können, kommen beispielsweise in Betracht: Stärke, zweckmäßigerweise ausgewählt aus der Gruppe der Mais-, Reis-, Kartoffel- oder Weizenstärke oder Mischungen davon sowie gegebenenfalls chemisch modifizierte Stärkederivate, Phosphorverbindungen, wie z.B. Trikresylphosphat, Tris-(2-chlorethyl)-phosphat, Tris-(2-chlorpropyl)-phosphat, Tris-(1,3-dichlorpropyl)-phosphat, Tris-(2,3-dibrompropyl)-phosphat und Tetrakis-(2-chlorethyl)-ethylen-diphosphat und anorganische Salze, wie z.B. Antimontrioxid, Aluminiumoxidhydrat, Ammoniumsulfat, Calciumsulfat, Ammoniumphosphate.

Als Ammoniumpolyphosphat findet insbesondere eine modifizierte, feinkörnige, schwerlösliche Verbindung mit der allgemeinen Formel

H₍ₙ₋ₘ₎₊₂ (NH₄)ₘ PₙO₃ₙ₊₁

Verwendung, in der n eine ganze Zahl mit einem Durchschnittswert von 20 bis 800, vorzugsweise ungefähr 700 bedeutet und das Verhältnis von m zu n 1 beträgt und die Modifikation besteht aus 80 bis 99,5 Masse% des vorgenannten Ammoniumpolyphosphat und 0,5 bis 20 Masse% eines gehärteten Epoxidharzes mit einem Epoxid-Äquivalentgewicht von 170 bis 220, das die einzelnen Ammoniumpolyphosphatpartikelchen umhüllt. Derartige Ammoniumpolyphosphate können beispielsweise bezogen werden von der Hoechst Aktiengesellschaft unter dem Warenzeichen Exolit®.

Als Flammschutz (d) bewährt haben sich somit und werden vorzugsweise verwendet:
di) 5 bis 100 Gew.-Teile, vorzugsweise 35 bis 80 Gew.-Teile und inbesondere 45 bis 65 Gew.-Teile Melamin,
dii) 6 bis 18 Gew.-Teile Blähgraphit und
diii) 0,5 bis 15 Gew.-Teile, vorzugsweise 0,5 bis 8 Gew.-Teile und insbesondere 3 bis 8 Gew.-Teile Ammoniumpolyphosphat pro 100 Gew-Teile der höhermolekularen Verbindungen mit mindestens zwei reaktiven Wasserstoffatomen (b).

Zur Vereinfachung der Handhabung und leichteren Verarbeitbarkeit können aus den Flammschutzmitteln und höhermolekularen Verbindungen mit mindestens zwei reaktiven Wasserstoffatomen Dispersionen hergestellt werden.
e) Zu Treibmitteln (e), welche zur Herstellung der PU-Weichschaumstoffe verwendet werden können, gehört vorzugsweise Wasser, das mit Isocyanatgruppen unter Bildung von Kohlendioxid als Treibgas reagiert. Die Wassermengen, die zweckmäßigerweise eingesetzt werden, betragen 0,1 bis 8 Gew.-Teile, vorzugsweise 1,0 bis 3,5 Gew.-Teile und insbesondere 2,0 bis 3,0 Gew.-Teile, bezogen auf 100 Gew.-Teile der höhermolekularen Verbindungen mit mindestens zwei reaktiven Wasserstoffatomen (b).
   Im Gemisch mit Wasser oder als alleinige Treibmittel können auch physikalisch wirkende Treibmittel eingesetzt werden, wobei zur Herstellung der flammwidrigen PU-Integralweichschaumstoffe vorzugsweise ausschließlich physikalisch wirkende Treibmittel Anwendung finden. Geeignet sind Flüssigkeiten, welche gegenüber den organischen, gegebenenfalls modifizierten Polyisocyanaten (a) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie n- und iso-Pentan, technische Pentangemische n- und iso-Butan und Propan, Ether, wie Furan, Dimethylether und Diethylether, Ketone, wie Aceton und Methylethylketon, Ester wie Ethylacetat und Methylformiat und vorzugsweise halogenierte Kohlenwasserstoffe, wie Methylenchlorid, Difluormethan, Trichlorfluormethan, Dichlordifluormethan, Dichlormonofluormethan, 1,1,1-Dichlorfluorethan, 1,1,1-Chlordifluorethan, Dichlortetrafluorethan, Tetrafluorethan, 1, 1,2-Trichlor-1,2,2-trifluorethan und Heptafluorpropan, sowie Edelgase, wie z.B. Krypton. Auch Gemische dieser niedrigsiedenden Flüssigkeiten untereinander und/oder mit anderen substituierten oder unsubstituierten Kohlenwasserstoffen können verwendet werden.
   Die erforderliche Menge an physikalisch wirkenden Treibmitteln kann in Abhängigkeit von der gewünschten Schaumstoffdichte auf einfache Weise ermittelt werden und beträgt 0 bis ungefähr 30 Gew.-Teile, vorzugsweise 0 bis 20 Gew.-Teile pro 100 Gew.-Teile der höhermolekularen Verbindungen (b), wobei sich ihr Anteil bei der Mitverwendung von Wasser anteilmäßig verringert. Gegebenenfalls kann es zweckmäßig sein, die gegebenenfalls modifizierten Polyisocyanate (a) mit dem physikalisch wirkenden Treibmittel zu mischen und dadurch ihre Viskosität zu verringern.
f) Zur Beschleunigung der Umsetzung zwischen den höhermolekularen Verbindungen mit mindestens zwei reaktiven Wasserstoffatomen (b), hydroxylgruppenhaltigen Kettenverlängerungs- oder Vernetzungsmitteln und Wasser als Treibmittel (e) und den organischen Polyisocyanaten und/ oder modifizierten Polyisocyanaten (a) werden der Reaktionsmischung übliche Polyurethankatalysatoren einverleibt. Zweckmäßigerweise verwendet werden basische Polyurethankatalysatoren, beispielsweise tertiäre Amine, wie Dimethylbenzylamin, Dicyclohexylmethylamin, Dimethylcyclohexylamin, N,N,N'N'-Tetramethyl-diamino-diethylether, Bis-(dimethylaminopropyl)-hamstoff, N-Methyl- bzw. N-Ethylmorpholin, Dimethylpiperazin, N-Dimethylaminoethylpiperidin, 1,2-Dimethylimidazol, 1-Azabicyclo-(2,2,0)-octan, Dimethylaminoethanol, 2-(N,N-Dimethylaminoethoxy)ethanol, N,N',N"-Tris-(dialkylaminoalkyl)-hexahydrotriazin, z.B. N,N',N"-Tris-(dimethylaminopropyl)-s-hexahydrotriazin, Di-(4-dimethylaminocyclohexyl)-methan und insbesondere Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen. Bewährt hat sich insbesondere eine Katalysatorkombination, die als wesentliche Komponenten enthält: Triethylendiamin, Bis-(dimethylaminoethyl)ether, 2-(Dimethylaminoethoxy)ethanol, Dibutylzinndilaurat und Dibutyldilaurylzinnmercaptid und wobei die genannten Verbindungen vorzugsweise in folgenden Gewichtsmengenverhältnissen vorliegen: 0,2 bis 1,5 zu 0,1 bis 0,2 zu 0,1 bis 0,25 zu 0,1 bis 0,3 zu 0,05 bis 0,15. Eingesetzt werden zweckmäßigerweise 0,1 bis 10 Gew. %, vorzugsweise 0,3 bis 3 Gew.% Katalysator auf Basis tert. Amine und/oder 0,01 bis 0,5 Gew.%, vorzugsweise 0,03 bis 0,25 Gew.%, Metallsalze oder 0,1 bis 5 Gew.%, vorzugsweise 0,3 bis 3,5 Gew.% der vorgenannten Katalysatorkombination, bezogen auf das Gewicht der höhermolekularen Verbindungen (b).
g) Der Reaktionsmischung können gegebenenfalls auch noch Hilfsmittel und/oder Zusatzstoffe (g) einverleibt werden. Genannt seien beispielsweise oberflächenaktive Stoffe, Stabilisatoren, Hydrolyseschutzmittel, Porenregler, fungistatisch und bakteriostatisch wirkende Substanzen, Farbstoffe, Pigmente und Füllstoffe.
   In Betracht, kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester und Türkischrotöl, die in Mengen von 0,05 bis 8, vorzugsweise 0,4 bis 5 Gew.-Teilen pro 100 Gew.-Teilen der höhermolekularen Verbindungen (b) angewandt werden.

Nähere Angaben über die oben genannten anderen üblichen Hilfs- und Zusatzstoffe sind der Fachliteratur, beispielsweise der Monographie von J.H. Saunders und K.C. Frisch "High Polymers", Band XVI, Polyurethanes, Teil 1 und 2, Verlag Interscience Publishers, 1962 bzw. 1964 oder dem Kunststoff-Handbuch, Polyurethane, Band VII, Hanser-Verlag, München, Wien, 1. und 2. Auflage, 1966 und 1983 zu entnehmen.

Zur Herstellung der PU-Weichschaumstoffe bzw. PU-Weichschaumstoff-Formkörper werden die organischen, gegebenenfalls modifizierten Polyisocyanate (a), die höhermolekularen Verbindungen mit mindestens zwei reaktiven Wasserstoffatomen (b) und gegebenenfalls die Kettenverlängerungs und/oder Vernetzungsmittel (c) in Gegenwart von Flammschutzmitteln (d), Treibmitteln (e), Katalysatoren (f) und gegebenenfalls Hilfsmitteln und/oder Zusatzstoffen (g) bei Temperaturen von 0 bis 100°C, vorzugsweise 15 bis 80°C in solchen Mengenverhältnissen zur Reaktion gebracht, daß pro NCO-Gruppe 0,5 bis 2, vorzugsweise 0,8 bis 1,3 und insbesondere ungefähr ein reaktive(s) Wasserstoffatom (e) gebunden an die Ausgangskomponenten (b) und (c) vorliegen und, sofern Wasser als Treibmittel eingesetzt wird, das Molverhältnis von Äquivalente Wasser zu Äquivalente NCO-Gruppe 0,5 bis 5:1, vorzugsweise 0,7 bis 0,95:1 und insbesondere 0,75 bis 0,85:1 beträgt.

Die PU-Weichschaumstoffe oder PU-Weichschaumstoff-Formkörper werden zweckmäßigerweise nach dem one shot-Verfahren durch Vermischen von zwei Komponenten A und B hergestellt, wobei die Ausgangskomponenten (b) bis (f) und gegebenenfalls (g) zu der sogenannten A-Komponente vereinigt und als B-Komponente die Ausgangskomponente (a) gegebenenfalls im Gemisch mit (d), (g) und inerten, physikalisch wirkenden Treibmitteln verwendet werden. Somit müssen die A- und B-Komponente vor Herstellung der PU-Weichschaumstoffe nur noch intensiv gemischt werden. Die Reaktionsmischungen können in offenen oder geschlossenen Formwerkzeugen sowie zu Blockschaumstoff verschäumt werden.

Zur Herstellung von PU-Weichschaumstoff-Formkörpern wird die Reaktionsmischung mit einer Temperatur von 15 bis 80°C, vorzugsweise 23 bis 65°C in ein zweckmäßigerweise temperierbares, metallisches Formwerkzeug eingebracht. Die Formwerkzeugtemperatur beträgt üblicherweise 20 bis 90°C, vorzugsweise 35 bis 70°C. Die Reaktionsmischung läßt man unter Verdichtung, z. B. bei Verdichtungsgraden von 1,1 bis 6, vorzugsweise von 1,1 bis 1,5 in dem geschlossenen Formwerkzeug aushärten.

Die nach dem erfindungsgemäßen Verfahren hergestellten PU-Weichschaumstoffe und -Formkörper besitzen Dichten von 30 bis 150 g/Liter, vorzugsweise von 40 bis 100 g/Liter. Sie sind gut flammwidrig, wobei sie den Kerosinbrennertest (FAR 25.853 C) bestehen, besitzen nach ASTM E 662-79 eine geringere Rauchgasdichte und weisen ein gutes mechanisches Eigenschaftsniveau auf. Die Formschaumstoffe finden vorzugsweise Verwendung als Polsterelemente z.B. als Sitzpolster, Armlehnen, Kopfstützen, Sonnenblenden und Sicherheitsabdeckungen in Fahrzeugkabinen, vorzugsweise Kraftfahrzeugen und Flugzeugen, wobei insbesondere flammwidrige Flugzeugsitze mit Dichten von 30 bis 100 g/Liter hergestellt werden.

Die in den Beispielen genannten Teile beziehen sich auf das Gewicht.

### Beispiel

### A-Komponente: Mischung, bestehend aus

| | |
|---|---|
| 37,68 | Teilen eines mit Glycerin gestarteten Polyoxypropylen (86 Gew.-%)-polyoxyethylen (14 Gew.-%)-polyols mit einem durchschnittlichen Molekulargewicht von 6000, |
| 4,99 | Teilen eines mit Trimethylolpropan gestarteten Pfropf-polyoxypropylen (84 Gew.-%)-polyoxyethylen-(16 Gew.-%)-polyols mit einem durchschnittlichen Molekulargewicht von ungefähr 6000, und einem Pfropfpolymergehalt von 20 Gew.-%, bezogen auf das Gesamtgewicht, hergestellt unter Verwendung einer Acrylnitril-Styrol-Mischung zur Pfropfung (Bayfit ® 3699 der Bayer AG) |
| 9,97 | Teilen eines Polyoxypropylen (81 Gew.-%)-polyoxyethylen (19 Gew.-%)-glykols, mit einem durchschnittlichen Molekulargewicht von ungefähr 3900, hergestellt unter Verwendung von Dipropylenglykol als Startermolekül, |
| 0,6 | Teilen Silicon-Stabilisator (Silicon DC 5043 der Firma Dow Coming), |
| 0,3 | Teilen Silicon-Stabilisator (Tegostab ® B 8631 der Firma Goldschmidt), |
| 0,83 | Teilen Triethylendiamin (Dabco ® X 540 der Firma Air Products), |
| 0,078 | Teilen Bis(dimethylaminoethyl)ether, |
| 0,1 | Teilen 2-(Dimethylaminoethoxy)ethanol, |
| 0,05 | Teilen Dibutylzinndilaurat, |
| 0,025 | Teilen Dibutyldilaurylzinnmercaptid, |
| 1,0 | Teilen Hexandiol-1,6, |
| 1,19 | Teilen Wasser, |
| 5,607 | Teilen Trichlorfluormethan, |
| 28,6 | Teilen Melamin mit einem Schüttgewicht von 600 g/Liter, |
| 6,17 | Teilen Blähgraphit (Sigraflex ® FR 90-60/80 der Firma Sigri GmbH) und |
| 2,81 | Teilen Ammoniumpolyphosphat (Exolit ® 422 der Fa. Hoechst AG, Hürth). |

### B-Komponente:

Urethangruppen enthaltendes Quasiprepolymer mit einem NCO-Gehalt von 31 Gew.-% und einer Viskosität von 52 m-Pas bei 25°C, hergestellt aus einem 2,4-/2,6-Toluylendiisocyanat-lsomerengemisch im Gewichtsverhältnis 80: 20 und einem Polyoxypropylen-polyoxyethylen-glykol mit einem Molekulargewicht von 3900.

| | |
|---|---|
| 100 | Teile der A-Komponente und |
| | |
| 25 | Teile der B-Komponente wurden, entsprechend einem NCO-Index von 100, bei 23°C intensiv gemischt und |
| | |
| 1150 g | dieser Reaktionsmischung in ein auf 50°C temperiertes, metallisches Formwerkzeug mit den Innenabmessungen 40x40x10 cm, eingebracht, das Formwerkzeug geschlossen und die Reaktionsmischung aushärten gelassen. |

Der Formkörper wurde nach 10 Minuten entformt und danach 24 Stunden bei Raumtemperatur gelagert.
An dem flammwidrigen Formkörper wurden folgende mechanische Eigenschaften gemessen:

| | |
|---|---|
| Raumgewicht [g/l] | 72 |
| Zugfestigkeit nach DIN 53571 [k/Pa] | 113 |
| Dehnung nach DIN 53571 [%] | 167 |
| Weiterreißfestigkeit nach DIN 53575 [N/mm] | 0,59 |
| Druckverformungsrest nach DIN 53572 [%] | 11 |
| Kerosinbrennertest nach FAR 25 853 C Gewichtsverlust [%] | 4,52 |

### Vergleichsbeispiel I

A-Komponente: analog dem Beispiel, wobei jedoch auf den Zusatz von Blähgraphit verzichtet und dafür 34,77 Gew.-Teile Melamin eingesetzt wurden.

### B-Komponente: analog Beispiel

Die Herstellung des Formkörpers erfolgte analog den Angaben des Beispiels.

### Vergleich der Ergebnisse des Kerosinbrennertestes nach FAR 25 853 C

Nach den Bestimmungen des Federal Aviation Regulation (FAR) wurde ein vergleichender Kerosinbrennertest ausgeführt, der folgende Ergebnisse ergab:

| Formkörper gemäß | Vergleichsbeispiel I | Beispiel |
|---|---|---|
| Gewicht¹[g] | 2741 | 3100 |
| nach Test [g] | 2477 | 2890 |
| Gew.verl. [%] | 9.63 | 6.77 |
| Gewicht²[g] | 3557 | 3493 |
| nach Test [g] | 3261 | 3335 |
| Gew.verl. [%] | 8.32 | 4.52 |

| | | |
|---|---|---|
| 1) Gewicht gleich Summe aus Kissen- und Rückenteil | | |
| 2) Gewicht gleich Summe aus Kissen-, Rückenteil und Bezugsstoff (Wolle) | | |

Prüfung nach ASTM E 662-79 Standard Test Method for SPECI FIC OPTICAL DENSITY OF SMOKE GENERATED BY SOLID MATERIALS (Rauchgasdichte nach ATS 1000.001)

Die zulässigen Werte mit und ohne Beflammung dürfen für Ds nach 1,5 min 100 und nach 4 min 200 nicht überschreiten. In der nachfolgenden Tabelle sind die an den nach Beispiel und Vergleichsbeispiel I hergestellten Formkörper gemessen Ergebnisse zusammengestellt.

### Messung der Rauchgasdichte entsprechend ATS 1000.001

### Verschwelen ohne Beflammung

| | Ds (spec.opt.Dichte) nach t (min) Versuchsdauer | |
|---|---|---|
| | 1,5 min | 4,0 min |
| Vergleichsbeispiel I | 69 | 160 |
| Beispiel | 84 | 169 |

### Verschwelen mit Beflammung

| | Ds (spec.opt.Dichte) nach t (min) Versuchsdauer | |
|---|---|---|
| | 1,5 min | 4,0 min |
| Vergleichsbeispiel I | 116 | 222 |
| Beispiel | 18 | 132 |

### Vergleichsbeispiel II

A-Komponente: analog dem Beispiel, wobei jedoch auf den Zusatz von Melamin verzichtet und dafür 34,77 Gew.-Teile Blähgraphit eingesetzt wurden.

Man erhielt eine hochpastöse Masse, die nicht homogen mischbar war und sich daher nicht zu einem Polyurethanschaumstoff verarbeiten ließ.

### Vergleichsbeispiel III

A-Komponente: analog dem Beispiel, wobei jedoch auf den Zusatz von Melamin und Ammoniumpolyphosphat verzichtet und dafür 30 Gew.-Teile Blähgraphit eingesetzt wurden.

Man erhielt eine inhomogene, hochpastöse Masse, die sich nicht zu einem Polyurethanschaumstoff verarbeiten ließ.

### Vergleichsbeispiel IV

A-Komponente: analog dem Beispiel, wobei jedoch auf den Zusatz von Blähgraphit und Ammoniumpolyphosphat verzichtet und dafür 30 Gew.-Teile Melamin eingesetzt wurden.

### Vergleichsbeispiel V

15 A-Komponente: analog dem Beispiel, wobei jedoch auf den Zusatz von Melamin und Ammoniumpolyphosphat verzichtet und dafür 15 Gew.-Teile Blähgraphit eingesetzt wurden.

### Vergleichsbeispiel VI

A-Komponente: analog dem Beispiel, wobei jedoch auf den Zusatz von Melamin verzichtet und dafür 30 Gew.-Teile Blähgraphit und 2,5 Gew.-Teile Ammoniumpolyphosphat eingesetzt wurden.

Man erhielt eine inhomogene, hochpastöse Masse, die sich nicht zu einem Polyurethanschaumstoff verarbeiten ließ.

### Vergleichsbeispiel VII

A-Komponente: analog dem Beispiel, wobei jedoch auf den Zusatz von Blähgraphit verzichtet und dafür 30 Gew.-Teile Melamin und 2,5 Gew.-Teile Ammoniumpolyphosphat eingesetzt wurden.

An den hergestellten Polyurethanschaumstoffen wurde nach den Bestimmungen des FAR ein vergleichender Kerosinbrennertest durchgeführt, der folgende Ergebnisse ergab:

| Vergleichsbeispiel | IV | V | VII |
|---|---|---|---|
| Gewichtsverlust [%] | 13,4 | 13,6 | 9,2 |

## Patentansprüche

1. Verfahren zur Herstellung von flammwidrigen Polyurethan-weichschaumstoffen mit verminderter Rauchgasdichte durch Ümsetzung von
a) organischen Polyisocyanaten und/oder modifizierten organischen Polyisocyanaten mit
b) höhermolekularen Verbindungen mit mindestens zwei reaktiven Wasserstoflatomen und
c) gegebenenfalls niedermolekularen Kettenverlängerungsmitteln
in Gegenwart von
d) Flammschutzmitteln,
e) Treibmitteln,
f) Katalysatoren
sowie gegebenenfalls
g) Hilfsmitteln und/oder Zusatzstoffen,
dadurch gekennzeichnet, daß als Flammschutzmittel (d) pro 100 Gew.-Teile der höhermolekularen Verbindungen mit mindestens zwei reaktiven Wasserstoffatomen (b)
di) 5 bis 100 Gew.-Teile Melamin,
dii) 6 bis 18 Gew.-Teile Blähgraphit und
diii) 0,5 bis 15 Gew.-Teile modifiziertes, d.h. mit gehärtetem Epoxidharz umhülltes, oder unmodifiziertes Ammoniumpolyphosphat verwendet werden.

2. Verfahren nach Anspruch 1, dadurch gekennzeichnet, daß man pro 100 Gew.-Teile der höhermolekularen Verbindungen mit mindestens zwei reaktiven Wasserstoffatomen (b) als Flammschutzmittel (d) verwendet:
di) 45 bis 65 Gew.-Teile Melamin,
dii) 6 bis 18 Gew.-Teile Blähgraphit,
diii) 0,5 bis 8 Gew.-Teile modifiziertes, d.h. mit gehärtetem Epoxidharz umhülltes oder unmodifiziertes, Ammoniumpolyphosphat und
diii) 0 bis 15 Gew.-Teile mindestens eines zusätzlichen anderen Flammschutzmittels.

3. Verfahren nach Anspruch 1 oder 2, dadurch gekennzeichnet, daß das Melamin eine Teilchengröße von durchschnittlich 20 bis 40 µm und eine Schuztdicnte im Bereich von 500 bis 650 g/Liter besitzt.

4. Verfahren nach Anspruch 1 oder 2 oder 3, dadurch gekennzeichnet, daß ungefähr 95 Gew.-% des Blähgraphits eine durchschnittliche Teilchengröße von kleiner als 0,5 mm besitzen.

5. Verfahren nach einen Ansprüch der 1 oder 3, dadurch gekennzeichnet, daß man ein modifiziertes Ammoniumpolyphosphat verwendet, das die allgemeine Formel
H₍ₙ₋ₘ₎₊₂ (NH₄)ₘ PₙO₃ₙ₊₁
besitzt, in der n eine ganze Zahl mit einem Durchschnittswert von 20 bis 800 bedeutet und das Verhältnis von m zu n 1 beträgt und das modifizierte Ammoniumpolyphosphat besteht aus 80 bis 99,5 Masse% Ammoniumpolyphosphat und 0,5 bis 20 Masse% eines gehärteten Epoxidharzes mit einem Epoxid-Äquivalentgewicht von 170 bis etwa 220, das die einzelnen Ammoniumpolyphosphatpartikelchen umhüllt.

6. Verfahren nach Anspruch 1, dadurch gekennzeichnet, daß man als höhermolekulare Verbindungen (b) Mischungen verwendet, die enthalten
b1) mindestens 60 Gew.-%, bezogen auf das Gewicht der Mischung (b), mindestens eines Polyether-polyols mit einer durchschnittlichen Funktionalität von 2 bis 3 und einem durchschnittlichen Molekulargewicht von 3600 bis 6500 und
b2) weniger als 40 Gew.-%, bezogen auf das Gewicht der Mischung (b), mindestens eines polymermodifizierten Polyether-polyols mit einer durchschnittlichen Funktionalität von 2 bis 3 und einem durchschnittlichen Molekulargewicht von 3600 bis 6500, ausgewählt aus Pfropfpolyether-polyolen oder tert.-Aminogruppen gebunden enthaltenden Polyurethan-Polyether-polyoldispersionen oder Mischungen davon.

## Claims

1. A process for the preparation of a flame-resistant soft polyurethane foam having reduced smoke density, by reacting
a) an organic polyisocyanate and/or a modified organic polyisocyanate with
b) a high-molecular-weight compound containing at least two reactive hydrogen atoms and
c) if desired, a low-molecular-weight chain extender,
in the presence of
d) a flameproofing agent,
e) a blowing agent,
f) a catalyst
and, if desired,
g) assistants and/or additives,
wherein
di) from 5 to 100 parts by weight of melamine,
dii) from 6 to 18 parts by weight of expandable graphite and
diii)from 0.5 to 15 parts by weight of modified, i.e. encapsulated with cured epoxy resin, or unmodified ammonium polyphosphate,
per 100 parts by weight of the high-molecular-weight compound containing at least two reactive hydrogen atoms (b) are used as flameproofing agent (d).

2. A process as claimed in claim 1, wherein the flameproofing agent (d) is
di) from 45 to 65 parts by weight of melamine,
dii) from 6 to 18 parts by weight of expandable graphite,
diii) from 0.5 to 8 parts by weight of modified, i.e. encapsulated with cured epoxy resin, or unmodified ammonium polyphosphate and
div) from 0 to 15 parts by weight of at least one further flameproofing agent
per 100 parts by weight of the high-molecular-weight compound containing at least two reactive hydrogen atoms (b).

3. A process as claimed in claim 1 or 2, wherein the melamine has a mean particle size of from 20 to 40 µm and a bulk density of from 500 to 650 g/l.

4. A process as claimed in claim 1 or 2 or 3, wherein approximately 95 % by weight of the expandable graphite has a mean particle size of less than 0.5 mm.

5. A process as claimed in either of claims 1 or 3, wherein a modified ammonium polyphosphate of the general formula
H_{(n-m) +2}(NH₄)ₘPₙO₃ₙ₊₁
is used where n is an integer having a mean of from 20 to 800, and the m:n ratio is 1, and the modified ammonium polyphosphate comprises from about 80 to 99.5 % by weight of ammonium polyphosphate and from about 0.5 to 20 % by weight of a cured epoxy resin which has an epoxide equivalent weight of from about 170 to about 220 and encapsulates the individual ammonium polyphosphate particles.

6. A process as claimed in claim 1, wherein the high-molecular-weight compound (b) is a mixture which contains
b1) 60 % by weight or more, based on the weight of the mixture (b), of one or more polyether-polyols having a mean functionality of from 2 to 3 and a mean molecular weight of from 3600 to 6500, and
b2) less than 40 % by weight, based on the weight of the mixture (b), of one or more polymer-modified polyether-polyol having a mean functionality of from 2 to 3 and a mean molecular weight of from 3600 to 6500, selected from the group comprising graft polyether-polyols and polyurethane/polyether-polyol dispersions containing tert-amino groups in bound form, or a mixture thereof.

## Revendications

1. Procédé pour préparer des mousses souples ignifuges de polyuréthanne à densité amoindrie de gaz de fumée par réaction de
a) des polyisocyanates organiques et/ou des polyisocyanates organiques modifiés avec
b) des composés à haut poids moléculaire à au moins deux atomes d'hydrogène réactifs et
c) le cas échéant des agents d'allongement des chaînes à bas poids moléculaire, en présence de
d) des agents ignifugeants,
e) des agents porogènes,
f) des catalyseurs
et le cas échéant
g) des produits auxiliaires et/ou additifs,
caractérisé par le fait que l'on utilise en tant qu'agents ignifugeants d), pour 100 parties en poids du composé à haut poids moléculaire et à au moins deux atomes d'hydrogène réactifs b)
di) 5 à 100 parties en poids de mélamine,
dii) 6 à 18 parties en poids de graphite gonflable et
diii) 0,5 à 15 parties en poids d'un polyphosphate d'ammonium modifié, c'est-à-dire enrobé d'une résine époxydique durcie, ou non modifié.

2. Procédé selon la revendication 1, caractérisé par le fait que l'on utilise en tant qu'agents ignifugeants d), pour 100 parties en poids du composé à haut poids moléculaire et à au moins deux atomes d'hydrogène réactifs b) :
di) 45 à 65 parties en poids mélamine,
dii) 6 à 18 parties en poids de graphite gonflable,
diii) 0,5 à 8 parties en poids de polyphosphate d'ammonium modifié, c'est-à-dire enrobé d'une résine époxydique durcie, ou non modifié et
diiii) 0 à 15 parties en poids d'au moins un autre agent ignifugeant.

3. Procédé selon la revendication 1 ou 2, caractérisé par le fait que la mélamine a une dimension de particule de 20 à 40 µm en moyenne et une densité apparente dans l'intervalle de 500 à 650 g/l.

4. Procédé selon la revendication 1 ou 2 ou 3, caractérisé par le fait que 95 % en poids environ du graphite gonflable a une dimension de particule moyenne inférieure à 0,5 mm.

5. Procédé selon l'une des revendications 1 et 3, caractérisé par le fait que l'on utilise un polyphosphate d'ammonium modifié répondant à la formule générale
H₍ₙ₋ₘ₎₊₂(NH₄)ₘPₙO₃ₙ₊₁
dans laquelle n est un nombre entier ayant une valeur moyenne de 20 à 800 et le rapport m/n est égal à 1, et le polyphosphate d'ammonium modifié consiste en 80 à 99,5 % en poids de polyphosphate d'ammonium et 0,5 à 20 % en poids d'une résine époxydique durcie ayant un poids équivalent d'époxyde de 170 à 220 environ et qui enrobe les particules individuelles de polyphosphate d'ammonium.

6. Procédé selon la revendication 1, caractérisé par le fait que l'on utilise en tant que composés à haut poids moléculaire b) des mélanges qui contiennent
b1) au moins 60 % en poids, par rapport au poids du mélange b), d'au moins un polyéther-polyol ayant une fonctionnalité moyenne de 2 à 3 et un poids moléculaire moyen de 3600 à 6500 et
b2) moins de 40 % en poids, par rapport au poids du mélange b), d'au moins un polyéther-polyol modifié par un polymère, à une fonctionnalité moyenne de 2 à 3 et un poids moléculaire moyen de 3600 à 6500, choisi parmi les polyéther-polyols greffés ou les dispersions de polyuréthanne-polyéther-polyols contenant à l'état chimiquement combiné des groupes tert-amino ou leurs mélanges.
